# EUROPEAN PATENT APPLICATION

(11) **EP 3 504 966 A1**
(43) Date of publication of application: **03.07.2019**
(21) Application number: 17843321.5
(22) Date of filing: 31.07.2017
(51) Int. Cl.: A01N 1/02

(54) **LIVER PRESERVATION METHOD AND OPERATION METHOD**

(30) Priority: 25.08.2016 JP 2016165106
(71) Applicant: SCREEN Holdings Co., Ltd., Kyoto-shi, Kyoto 602-8585 (JP); Riken, Wako-shi, Saitama 351-0198 (JP)
(72) Inventor: KOBAYASHI Eiji, Kyoto-shi Kyoto 602-8585 (JP); TSUJI Takashi, Wako-shi Saitama 351-0198 (JP); ISHIKAWA Jun, Wako-shi Saitama 351-0198 (JP); YOSHIMOTO Syuhei, Kyoto-shi Kyoto 602-8585 (JP); TORAI Shinji, Kyoto-shi Kyoto 602-8585 (JP)
(74) Representative: Goddar, Heinz J.
(86) International application number: PCT/JP2017/027600
(87) International publication number: WO 2018/037835

(57) **Abstract**

A perfusion lumen (17) is connected to at least one perfusion blood vessel (15) among a plurality of blood vessels that extends from a branch of a plurality of blood vessels protruding from a liver, the branch existing on a distal side viewed from the liver, to a further distal side viewed from the liver. The perfusion lumen (17) is supplied with perfusate to perfuse the liver and maintain the condition of the liver. Among blood vessels that are not connected to the perfusion lumen, at least one conserved blood vessel (11) is obstructed and conserved for anastomosis to a blood vessel of the living body. Accordingly, the perfusion state of the liver is maintained even during anastomosis to the blood vessels of the living body. This enables anastomosis to the blood vessels of the living body while maintaining the perfusion state of the liver.

## Description

### Technical Field

The present invention relates to an organ preservation method and operation method of anastomosing a blood vessel to a liver while maintaining a perfusion state of the liver.

### Background Art

In situations such as organ transplantation and partial resection in which an organ is taken out ex vivo to resect a tumor or other sites and then returned to a living body, the organ is removed from the living body, transported, and transplanted. When such transplantation or ex vivo partial resection is performed, ischemic organs due to a blockage of the bloodstreams to the organs become a problem.

In other words, an interruption of the bloodstreams to organs creates a "warm ischemic" period. Warm ischemic organs or tissues cause cell swelling disorders due to depletion of ATP or cause accumulation of waste products such as hypoxanthine. The hypoxanthine accumulated in the cells is rapidly metabolized by oxygenated perfusate when the bloodstreams to the organs or tissues are resumed. During this process, a large amount of active oxygen may be generated and provoke tissue disorders. Also, substances such as cytokines secreted by the cells may evoke acute systemic shock in living bodies that the organs are put in and connected to.

To address this problem, for example, a method disclosed in Patent Literature 1 is proposed as a technique for preserving an organ or tissue for a long time while maintaining the function of the organ or tissue, or a technique for recovering a warm ischemic organ to a level eligible for transplantation.

### Prior Art Documents

### Patent Literature

[Patent Literature 1] International Publication WO 2014/038473

### Summary of Invention

### Technical Problem

According to Patent Literature 1, in order to maintain or recover the function of an organ, the organ is connected to a perfusion circuit and supplied with perfusate to maintain or recover the function of the organ.

In this case, the organ removed from a donor is put in a recipient's body and connected to the perfusion circuit to maintain the perfusion state of the organ until just before the start of anastomosis of lumens such as blood vessels. However, the organ is disconnected from the perfusion circuit and falls into a warm ischemic state at the time when the anastomosis of lumens is started. Therefore, the longer it takes to resume the bloodstreams to the organ after the organ has been put in the recipient, the greater the adverse effects of the warm ischemic state of the organ on the recipient.

In view of this, it is an object of the present invention to provide a perfusion method in which the influence of the warm ischemic state of an organ is reduced by extending a period of maintaining the perfusion state of the organ from when the organ has been put in a recipient to when the bloodstreams to the organ are resumed, and to provide a lumen connection method using the perfusion method.

### Solution to Problem

To solve the above-described problems, the present invention includes a) a perfusion lumen connecting step of connecting a perfusion lumen to at least one perfusion blood vessel among a plurality of blood vessels that extends from a branch of a plurality of blood vessels protruding from a liver, the branch existing on a distal side viewed from the liver, to a further distal side viewed from the liver, b) a conserved blood vessel obstructing step of obstructing at least one conserved blood vessel among blood vessels that are not connected to the perfusion lumen in the step a), to conserve the at least one conserved blood vessel for anastomosis to a blood vessel of a living body, and c) a perfusion step of allowing perfusate to enter the liver from at least one inflow blood vessel among the plurality of blood vessels that protrudes from the liver and allowing perfusate draining from the liver to be discharged through at least one outflow blood vessel different from the inflow blood vessel.

The present invention also includes a) a perfusion lumen connecting step of connecting a perfusion lumen to at least one perfusion blood vessel among a plurality of blood vessels that extends from a branch of a plurality of blood vessels protruding from a liver, the branch existing on a distal side viewed from the liver, to a further distal side viewed from the liver, b) a conserved blood vessel obstructing step of obstructing at least one conserved blood vessel among blood vessels that are not connected to the perfusion lumen in the step a), to conserve the at least one conserved blood vessel for anastomosis to a blood vessel of a living body, c) a perfusion step of allowing perfusate to enter the liver from at least one inflow blood vessel among the plurality of blood vessels that protrudes from the liver and allowing perfusate draining from the liver to be discharged through at least one outflow blood vessel different from the inflow blood vessel, and d) an anastomosis step of anastomosing the plurality of conserved blood vessels to blood vessels of the living body while maintaining perfusion of the liver in the step c).

The inflow blood vessel may be a proper hepatic artery, the perfusion blood vessel may be a right gastric artery, and the conserved blood vessel may be a common hepatic artery.

The outflow blood vessel may be a portal vein, the perfusion blood vessel may be a splenic vein, and the conserved blood vessel may be an inferior mesenteric vein.

The outflow blood vessel and the conserved blood vessel may be infrahepatic inferior venae cavae, and the perfusion blood vessel may be a right renal vein or a left renal vein.

Note that the scope of the present invention also includes an invention for which one or more features of the present invention listed above are freely combined.

### Effects of the Invention

The present invention enables perfusion from blood vessels to an organ or tissue while conserving different blood vessels that are to be anastomosed to blood vessels of a living body. This allows the perfusion of the organ or tissue to continue even during the anastomosis to the blood vessels of the living body. Thus, it is possible to reduce the influence of the warm ischemic state of the organ or tissue after the organ or tissue has been put in the living body.

### Brief Description of Drawings

Fig. 1 illustrates how a donor's hepatic artery is treated according to the present invention;
Fig. 2 illustrates how a donor's portal vein is treated according to the present invention;
Fig. 3 illustrates how an infrahepatic inferior vena cava is treated according to the present invention;
Fig. 4 is a schematic diagram of a perfusion device according to the present invention;
Fig. 5 illustrates how a recipient's hepatic artery is treated according to the present invention;
Fig. 6 illustrates how a recipient's portal vein is treated according to the present invention;
Fig. 7 illustrates how a recipient's infrahepatic inferior vena cava is treated according to the present invention; and
Fig. 8 illustrates the condition around the hepatic artery and the portal vein at the time when vascular anastomosis is completed according to the present invention.

### Description of Embodiments

As one embodiment of the present invention, liver transplantation is described as an example. Note that the procedure described below is also applicable to partial resection in which an organ is temporarily removed from a living body to resect a lesion such as a tumor ex vivo from the organ and then returned to the original living body.

In the present application, donors and recipients may be humans, or may be non-human animals. The non-human animals may be rodents such as mice and rats; ungulates such as pigs (including miniature swine), goats, and sheep; carnivores including dogs; non-human primates such as monkeys, baboons, and chimpanzees; and other non-human mammals such as rabbits. The non-human animals may also be non-mammalian animals.

First, a liver graft is removed from a donor. The removal may be conducted in the following procedure of steps (D-1) to (D-5).

### (D-1)

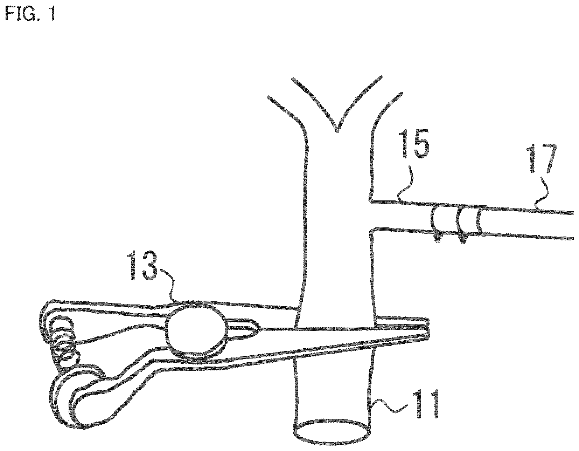

Fig. 1 illustrates how a donor's hepatic artery is treated in step (D-1). As illustrated in Fig. 1, the bloodstream is blocked by pinching a donor's common hepatic artery 11 with vessel forceps 13 such as bulldog forceps. The common hepatic artery 11 is then sectioned at a side distal to the position pinched with the vessel forceps 13, viewed from the liver (on the lower side of the page in Fig. 1). Furthermore, a right gastric artery 15 branching from the common hepatic artery 11 is sectioned, a first perfusate inflow cannula 17 is inserted in the right gastric artery 15, and the right gastric artery 15 and the perfusate inflow cannula 17 are secured with, for example, a suture. This forms a perfusion route while conserving the common hepatic artery 11 that serves as an anastomotic site to a recipient's blood vessel. Although the present embodiment describes an example of using vessel forceps such as bulldog forceps to interrupt bloodstreams in blood vessels, other equipment may be used as long as it serves as means for temporarily interrupting bloodstreams in blood vessels.

Step (D-1) includes a perfusion lumen connecting step of connecting a perfusion lumen (first perfusate inflow cannula 17) to at least one vessel (right gastric artery 15) among a plurality of blood vessels that extends from a branch of a plurality of blood vessels protruding from the liver (branch of the common hepatic artery 11 and the right gastric artery 15), the branch existing on a distal side viewed from the liver, to a further distal side viewed from the liver. Step (D-1) also includes a conserved blood vessel obstructing step of obstructing at least one vessel (common hepatic artery 11) among blood vessels that are not connected to the perfusion lumen in the perfusion lumen connecting step to conserve the at least one vessel as a conserved blood vessel for anastomosis to a blood vessel of a living body.

### (D-2)

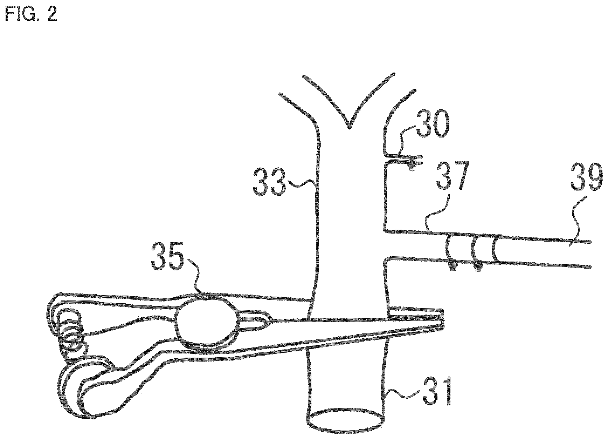

Fig. 2 illustrates how a donor's portal vein is treated in step (D-2). As illustrated in Fig. 2, a donor's left gastric vein 30 is ligated in advance and sectioned at a side distal to the ligated site, viewed from the liver. Next, a donor's superior mesenteric vein 31 is pinched with vessel forceps 35 at a side distal to its meeting point with a portal vein 33, viewed from the liver, so as to block the bloodstream. The superior mesenteric vein 31 is then sectioned at a side distal to the position pinched with the vessel forceps 35 (on the lower side of the page in Fig. 2). Furthermore, a splenic vein 37 is sectioned between the superior mesenteric vein 31 and an inferior mesenteric vein, a second perfusate inflow cannula 39 is inserted in the splenic vein 37, and the splenic vein 37 and the second perfusate inflow cannula 39 are secured with, for example, a suture. This forms a perfusion route while conserving the superior mesenteric vein 31 that serves as an anastomotic site to a recipient's blood vessel.

Step (D-2) includes a perfusion lumen connecting step of connecting a perfusion lumen (second perfusate inflow cannula 39) to at least one vessel (splenic vein 37) among a plurality of blood vessels that extends from a branch of a plurality of blood vessels protruding from the liver (a meeting point of the superior mesenteric vein 31 and the splenic vein 37 with the portal vein 33), the branch existing on a distal side viewed from the liver, to a further distal side viewed from the liver. Step (D-1) also includes a conserved blood vessel obstructing step of obstructing at least one vessel (superior mesenteric vein 31) among blood vessels that are not connected to the perfusion lumen in the perfusion lumen connecting step to conserve the at least one vessel as a conserved blood vessel for anastomosis to a blood vessel of a living body.

### (D-3)

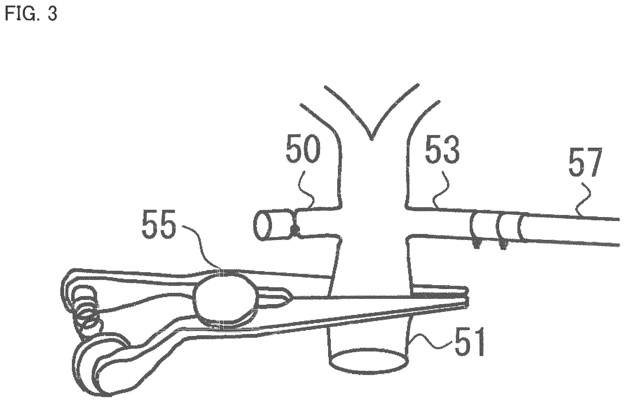

Fig. 3 illustrates how an infrahepatic inferior vena cava is treated in step (D-3). As illustrated in Fig. 3, a donor's right renal vein 50 is ligated in advance and sectioned at a side distal to the ligated site, viewed from the liver. Next, a donor's infrahepatic inferior vena cava 51 is pinched with vessel forceps 55 at a side distal to its meeting point with the right renal vein 50 and a left renal vein 53, viewed from the liver, so as to block the bloodstream. The infrahepatic inferior vena cava 51 is then sectioned at a side distal to the position pinched with the vessel forceps 55 (on the lower side of the page in Fig. 3). Furthermore, the left renal vein 53 is sectioned, a perfusate outflow cannula 57 is inserted in the left renal vein 53, and the left renal vein 53 and the perfusate outflow cannula 57 are secured with, for example, a suture. This forms a perfusion route while conserving the infrahepatic inferior vena cava 51 that serves as an anastomotic site to a recipient's blood vessel.

Step (D-3) includes a perfusion lumen connecting step of connecting a perfusion lumen (perfusate outflow cannula 57) to at least one vessel (left renal vein 53) among a plurality of blood vessels that extends from a branch of a plurality of blood vessels protruding from the liver (a meeting point of the infrahepatic inferior vena cava 51 with the right renal vein 50 and the left renal vein 53), the branch existing on a distal side viewed from the liver, to a further distal side viewed from the liver. Step (D-1) also includes a conserved blood vessel obstructing step of obstructing at least one vessel (infrahepatic inferior vena cava 51) among blood vessels that are not connected to the perfusion lumen in the perfusion lumen connecting step to conserve the at least one vessel as a conserved blood vessel for anastomosis to a blood vessel of a living body.

### (D-4)

A donor's suprahepatic inferior vena cava is pinched with vessel forceps to block the bloodstream and then sectioned. In addition, the common bile duct is also sectioned.

### (D-5)

The cannulas 17, 39 and 57 connected to the donor's liver in the above-described procedure of steps (D-1) to (D-4) are each connected to a perfusion device 100 described later to start perfusion, and the donor's liver is removed. In other words, perfusate is allowed to enter from the first perfusate inflow cannula 17 and the second perfusate inflow cannula 39 and to drain from the perfusate outflow cannula 57. In this way, the liver is removed from the donor while the perfusion of the liver graft with perfusate is maintained.

Step (D-5) includes a perfusion step of allowing perfusate to drain to the liver from at least one inflow blood vessel (right gastric artery 15 and splenic vein 37) among the plurality of blood vessels that protrudes from the liver and allowing perfusate draining from the liver to be discharged through least one outflow blood vessel (left renal vein 53) different from the inflow blood vessel(s).

In steps (D-1) to (D-5) described above, treatments that are normally given in the procedure for removing a liver graft from a donor (e.g., excision of connective tissues, peeling of blood vessels, temporary ligation or clamping of blood vessels for section of the blood vessels, blockage and dissection of the bile duct, application of coagulation agents to the liver graft, hemostasis at operation sites) may be given as needed by those skilled in the art.

In steps (D-1) to (D-5) described above, the inflow blood vessel may be the proper hepatic artery, the perfusion blood vessel may be the right gastric artery, and the conserved blood vessel may be the common hepatic artery. The outflow blood vessel may be the portal vein, the perfusion blood vessel may be the splenic vein, and the conserved blood vessel may be the inferior mesenteric vein. Alternatively, the outflow blood vessel and the conserved blood vessel may be infrahepatic inferior venae cava, and the perfusion blood vessel may be the right renal vein or the left renal vein.

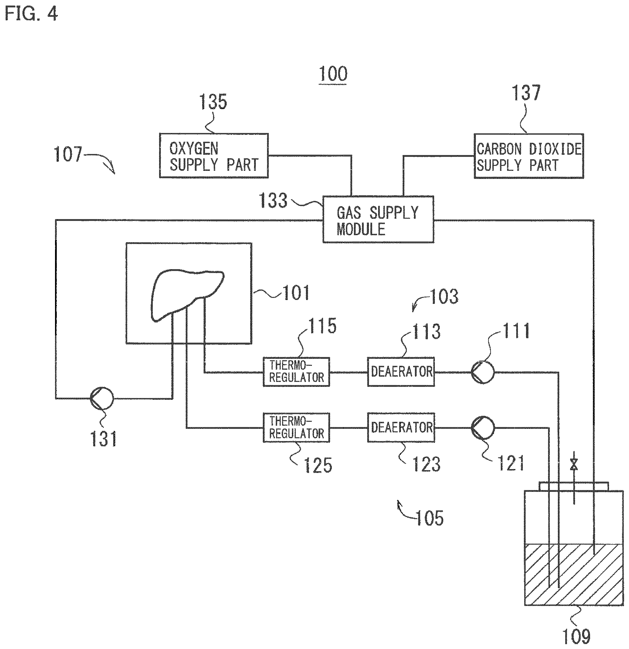

Fig. 4 shows an example of the perfusion device used in the present embodiment. The perfusion device 100 includes a reactor 101 that keeps a liver, a first inflow pathway 103 for supplying perfusate to the first perfusate inflow cannula 17 connected to the right gastric artery 15, a second inflow pathway 105 for supplying perfusate to the second perfusate inflow cannula 39 connected to the splenic vein 37, an outflow pathway 107 for collecting perfusate from the perfusate outflow cannula 57 connected to the left renal vein 53, and a reservoir 109 that stores perfusate.

A pump 111 that conveys perfusate under pressure, a deaerator 113 that deaerates perfusate, and a thermo-regulator 115 that regulates the temperature of perfusate are interposed in the first inflow pathway 103. Similarly to the first inflow pathway 103, a pump 121, a deaerator 123, and a thermo-regulator 125 are interposed in the second inflow pathway 105.

A pump 131 that collects perfusate from a liver, and a gas supply module 133 that adds oxygen and carbon dioxide to perfusate are interposed in the outflow pathway 107. The gas supply module 133 is connected to an oxygen supply part 135 and a carbon dioxide supply part 137.

In the present invention, in addition to oxygen and carbon dioxide, nitrogen may be further added to the perfusate. In this case, the gas supply module 133 is connected to a nitrogen supply part that supplies nitrogen.

The liver removed from the donor in the above-described procedure of steps (D-1) to (D-5) is connected to the perfusion device 100, kept in the reactor 101, and preserved by perfusion. Although the perfusion process according to the present embodiment is performed by circulating perfusate between the donor's liver and the perfusion device 100, the perfusion process that is performed on the donor's liver is not limited to this embodiment. In other words, other configurations may be employed, such as a configuration in which perfusate that has passed through the liver is collected in a container other than the reservoir 109 or in which perfusate is disposed of directly. Alternatively, a system of conveying perfusate by gravity to the liver, such as a drip infusion bag, may be employed instead of the configuration of conveying perfusate under pressure with a pump as in the above-described embodiment.

Depending on the condition of a liver, a configuration may be employed, in which perfusate is supplied from either one of the first inflow pathway 103 and the second inflow pathway 105 to a donor's liver.

Next, treatments are given in the following procedure of steps (P-1) to (P-7) as a preparation on the recipient's side.

### (P-1)

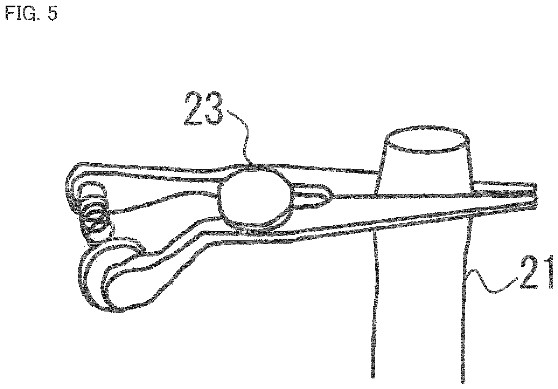

Fig. 5 illustrates how a recipient's hepatic artery is treated in step (P-1). The common bile duct is dissected in advance. As illustrated in Fig. 5, a hepatic artery 21 is pinched with vessel forceps 23 to block the bloodstream. The hepatic artery 21 is then sectioned as close as possible to the liver at a side proximal to the position pinched with the vessel forceps 23, viewed from the liver.

### (P-2)

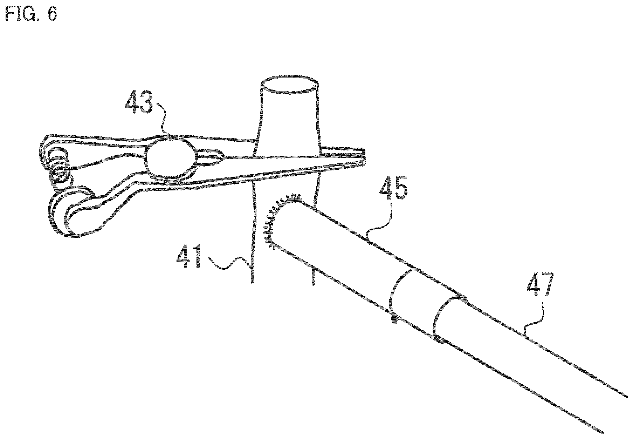

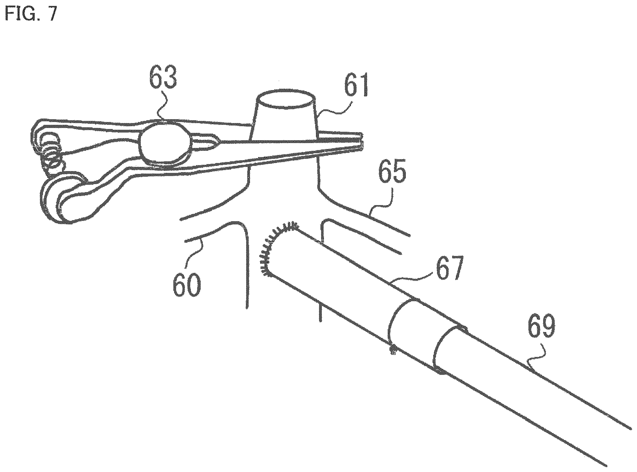

Fig. 6 illustrates how a recipient's portal vein is treated in step (P-2). Fig. 7 illustrates how a recipient's infrahepatic inferior vena cava is treated in step (P-2). In order to stabilize the hemodynamic status of the recipient, a shunt is placed. In other words, as illustrated in Fig. 6, part of the vascular wall of a portal vein 41 on a side proximal to the left gastric artery, viewed from the liver, is pinched with forceps (side clamping) to isolate that part from the bloodstream in the blood vessel. The vascular wall pinched with the forceps is then incised, and a graft blood vessel 45 is joined to the portal vein 41 by end-to-side anastomosis. Furthermore, as illustrated in Fig. 7, part of the vascular wall of an infrahepatic inferior vena cava 61 at a side distal to a meeting point of the infrahepatic inferior vena cava 61 with a right renal vein 60 and a left renal vein 61, viewed from the liver, is pinched with forceps to isolate that part from the bloodstream in the blood vessel. Thereafter, the vascular wall pinched with the forceps is incised, and a graft blood vessel 67 is joined to the infrahepatic inferior vena cava 61 by end-to-side anastomosis.

### (P-3)

Heparin is given to the recipient to prevent coagulation.

### (P-4)

A shunt tube 47 is inserted in the graft blood vessel 45 joined to the portal vein 41 and secured with, for example, a suture. Similarly, a shunt tube 69 is inserted in the graft blood vessel 67 joined to the infrahepatic inferior vena cava 61 and secured with, for example, a suture.

### (P-5)

The operation of a shunt route is started. The shunt route is configured by a pump and other equipment and allows the lower extremity venous blood flowing from the infrahepatic inferior vena cava and the portal blood flowing from the portal vein to enter the left jugular vein.

### (P-6)

The portal vein 41 is pinched with vessel forceps 43 at a side proximal to the position anastomosed to the graft blood vessel 45, viewed from the liver, to block the bloodstream entering the liver. Thereafter, the portal vein 41 is sectioned as close as possible to the liver on the liver side viewed from the position pinched with the vessel forceps 43. Similarly, the infrahepatic inferior vena cava 61 is pinched with vessel forceps 63 at a side proximal to the position anastomosed to the graft blood vessel 67, viewed from the liver, to block the bloodstream draining from the liver. Thereafter, the infrahepatic inferior vena cava 61 is sectioned as close as possible to the liver on the liver side viewed from the position pinched with the vessel forceps 63.

### (P-7)

The suprahepatic inferior vena cava is pinched with vessel forceps and sectioned as close as possible to the liver on the liver side viewed from the position pinched with the forceps. Through this procedure, all the bloodstreams to the recipient's liver are blocked, and all the connections to the blood vessels are sectioned. Soon after the procedure, the recipient's liver is removed.

Next, the donor's liver is put in the recipient, and vascular anastomosis is conducted in the following procedure.

### (A-1)

The suprahepatic inferior vena cava of the donor's liver and the recipient's suprahepatic inferior vena cava are joined by end-to-end anastomosis, and the vessel forceps pinching the recipient's suprahepatic inferior vena cava are removed.

### (A-2)

The infrahepatic inferior vena cava 51 of the donor's liver and the recipient's infrahepatic inferior vena cava 61 are joined by end-to-end anastomosis. Note that the outflow of the perfusate from the donor's liver to the left renal vein 53 continues even during the anastomosis of the infrahepatic inferior venae cavae. After the anastomosis of the infrahepatic inferior venae cavae, the vessel forceps 55 pinching the infrahepatic inferior vena cava 51 of the donor's liver are removed.

### (A-3)

The superior mesenteric vein 31 of the donor's liver and the recipient's portal vein 41 are joined by end-to-end anastomosis. Note that the inflow of the perfusate from the splenic vein 37 to the donor's liver continues even during the anastomosis of the superior mesenteric vein 31 and the portal vein 41. After the anastomosis of the superior mesenteric vein 31 and the portal vein 41, the vessel forceps 35 pinching the superior mesenteric vein 31 of the donor's liver are removed.

### (A-4)

The hepatic artery 11 of the donor's liver and the recipient's hepatic artery 21 are joined by end-to-end anastomosis. Note that the inflow of the perfusate from the right gastric artery 15 to the donor's liver continues even during the anastomosis of the hepatic arteries. After the anastomosis of the hepatic arteries, the vessel forceps 13 pinching the hepatic artery 11 of the donor's liver are removed.

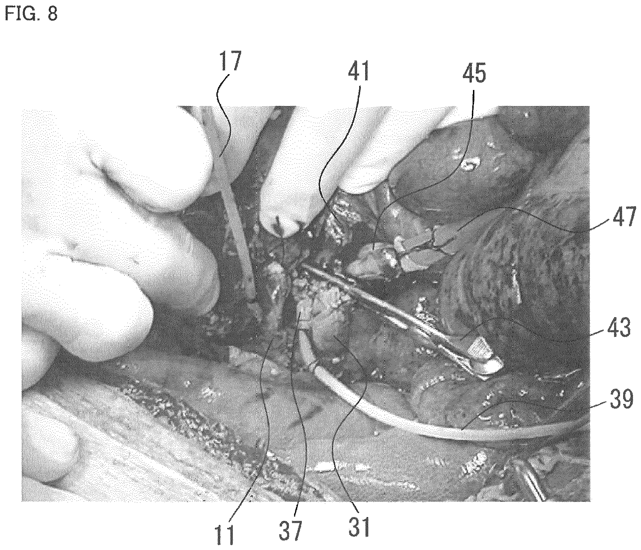

Fig. 8 illustrates the condition after the above-described procedure of step (A-4) is completed. Here, the situation around the hepatic artery and the portal vein is shown in enlarged dimension. The hepatic artery 11 shown on the left side of the page is connected to the first perfusate inflow cannula 17 to continue the supply of perfusate to the donor's liver. Note that the bloodstream of the recipient's hepatic artery 21 is interrupted by ligation. Referring to the portal vein shown on the right side of the page, the superior mesenteric vein 31 branching from the donor's portal vein 33 is anastomosed to the recipient's portal vein 41, and the donor's splenic vein 37 is connected to the second perfusate inflow cannula 39 to continue the supply of perfusate to the donor's liver. The recipient's portal vein 41 is also anastomosed to the graft blood vessel 45, and the graft blood vessel 45 is connected to the shunt tube 47. This configures the shunt route.

### (A-5)

After the anastomosis of each blood vessel, the bile duct of the donor's liver and the recipient's bile duct are joined by end-to-end anastomosis.

Steps (A-1) to (A-5) include an anastomosis step of anastomosing a plurality of conserved blood vessels (infrahepatic inferior vena cava 51, superior mesenteric vein 31, common hepatic artery 11) to blood vessels (infrahepatic inferior vena cava 61, portal vein 41, hepatic artery 21) of a living body (recipient) while maintaining the perfusion of the liver in the perfusion step started from step (D-5).

### (A-6)

The perfusion of the donor's liver is stopped, and the right gastric artery 15, the splenic vein 37, and the left renal vein 53 of the donor's liver are ligated. Then, the first perfusate inflow cannula 17, the second perfusate inflow cannula 39, and the perfusate outflow cannula 57 connected respectively to the blood vessels 15, 37, and, 53 are extracted.

### (A-7)

After the perfusion is stopped, the vessel forceps 63 pinching the infrahepatic inferior vena cava 61 and the vessel forceps 43 pinching the portal vein 41 are removed immediately to resume the bloodstreams to the liver. Thereafter, the vessel forceps 23 pinching the hepatic artery 21 are removed, and subsequently the vessel forceps pinching the suprahepatic inferior vena cava are removed.

### (A-8)

The shunt route used to stabilize the hemodynamic status of the recipient is stopped, and the graft blood vessel 45 anastomosed to the recipient's portal vein and the graft blood vessel 67 anastomosed to the infrahepatic inferior vena cava 61 are ligated. Then, the shunt tube 47 and the shunt tube 69 connected respectively to the blood vessels 45, 61, and 67 are extracted. In addition, the tube connected to the left carotid artery is extracted and sutured.

In the above-described procedure, the recipient's blood vessels that are anastomosed to the blood vessels of the donor's liver may be the same type of blood vessels as the donor's blood vessels used for anastomosis, or may be a different type of blood vessels therefrom. In the case of liver orthotopic transplantation, for example, the recipient's blood vessels that are anastomosed to the blood vessels of the donor's liver may be the same type of blood vessels as the blood vessels of the donor's liver used for anastomosis. In the case of liver heterotopic transplantation, for example, the recipient's blood vessels that are anastomosed to the blood vessels of the donor's liver may be a different type of blood vessels from the blood vessels of the donor's liver used for anastomosis. The type of recipient's blood vessels used in liver heterotopic transplantation can be appropriately selected on the basis of common general technical knowledge by those skilled in the art.

In the above-described procedure, treatments that are normally given in the procedure for transplanting a liver graft into a recipient (e.g., excision of connective tissues, peeling of blood vessels, temporary ligation or clamping of blood vessels for section and anastomose of the blood vessels, anastomosis of blood vessels, anastomosis of the bile duct, hemostasis at operation sites) may be given as needed by those skilled in the art.

The shapes, structures, sizes and materials of cannulas and tubes used in the present invention are not limited, and can be appropriately selected depending on the type of blood vessel by those skilled in the art.

The composition of the perfusate used in the perfusion device of the present invention is not limited as long as it is used in the perfusion of a normal liver graft, and commercially available perfusate (e.g., L-15 medium) may be used. Note that the perfusate is preferably supplemented with an oxygen carrier. Containing an oxygen carrier in the perfusate can suppress disorders of the liver graft and can increase the success rate of liver transplantation. Examples of the oxygen carrier used in the present invention include erythrocytes and artificial erythrocytes. Erythrocytes supplemented to the perfusate of the present invention are preferably erythrocytes of the blood type available for blood transfusion for the donor or the recipient, and more preferably erythrocytes derived from the donor or the recipient. Also, artificial erythrocytes supplemented to the perfusate of the present invention need only be molecules having a function of transporting oxygen, and examples thereof include perfluorocarbon and hemoglobin vesicles.

In the present invention, the "liver graft" is not limited to the liver removed from the donor. For example, the liver graft may be an artificial liver derived from stem cells such as iPS cells.

The terms as used in the specification of the present invention, unless otherwise defined particularly, are used to describe specific embodiments and do not intend to limit the invention.

Also, the term "including" as used in the specification of the present invention, unless otherwise clearly required to be understood differently by the content, intends to mean the presence of described items (such as components, steps, elements, and numbers), and does not intend to exclude the presence of other items (such as components, steps, elements, and numbers).

Unless otherwise defined, all the terms as used herein (including technical and scientific terms) have the same meanings as those broadly recognized by those skilled in the art of the technology to which the present invention pertains. The terms as used herein, unless otherwise explicitly defined, are to be construed as having meanings consistent with those in the specification of the present invention and in related technical fields, and shall not be construed as being idealized or as being interpreted as excessively formal meanings.

### Reference Signs List

- 11: Common hepatic artery
- 13: Vessel forceps
- 15: Right gastric artery
- 17: Perfusate inflow cannula
- 21: Hepatic artery
- 23: Vessel forceps
- 30: Left gastric vein
- 31: Superior mesenteric vein
- 33: Portal vein
- 33: Splenic vein
- 35: Vessel forceps
- 37: Splenic vein
- 39: Perfusate inflow cannula
- 41: Portal vein
- 43: Vessel forceps
- 50: Right renal vein
- 51: Infrahepatic inferior vena cava
- 53: Left renal vein
- 55: Vessel forceps
- 57: Perfusate outflow cannula
- 60: Right renal vein
- 61: Infrahepatic inferior vena cava
- 61: Left renal vein
- 61: Infrahepatic inferior vena cava
- 63: Vessel forceps

## Claims

1. A liver preservation method comprising:
a) a perfusion lumen connecting step of connecting a perfusion lumen to at least one perfusion blood vessel among a plurality of blood vessels that extends from a branch of a plurality of blood vessels protruding from a liver, the branch existing on a distal side viewed from said liver, to a further distal side viewed from said liver;
b) a conserved blood vessel obstructing step of obstructing at least one conserved blood vessel among blood vessels that are not connected to said perfusion lumen in said step a), to conserve said at least one conserved blood vessel for anastomosis to a blood vessel of a living body; and
c) a perfusion step of allowing perfusate to enter said liver from at least one inflow blood vessel among said plurality of blood vessels that protrudes from said liver and allowing perfusate draining from said liver to be discharged through at least one outflow blood vessel different from said inflow blood vessel.

2. The liver preservation method according to claim 1, wherein
said inflow blood vessel is a proper hepatic artery;
said perfusion blood vessel is a right gastric artery; and
said conserved blood vessel is a common hepatic artery.

3. The liver preservation method according to claim 1, wherein
said outflow blood vessel is a portal vein;
said perfusion blood vessel is a splenic vein; and
said conserved blood vessel is an inferior mesenteric vein.

4. The liver preservation method according to claim 1, wherein
said outflow blood vessel and said conserved blood vessel are infrahepatic inferior venae cava; and
said perfusion blood vessel is a right renal vein or a left renal vein.

5. An operation method comprising:
a) a perfusion lumen connecting step of connecting a perfusion lumen to at least one perfusion blood vessel among a plurality of blood vessels that extends from a branch of a plurality of blood vessels protruding from a liver, the branch existing on a distal side viewed from said liver, to a further distal side viewed from said liver;
b) a conserved blood vessel obstructing step of obstructing at least one conserved blood vessel among blood vessels that are not connected to said perfusion lumen in said step a), to conserve said at least one conserved blood vessel for anastomosis to a blood vessel of a living body;
c) a perfusion step of allowing perfusate to enter said liver from at least one inflow blood vessel among said plurality of blood vessels that protrudes from said liver and allowing perfusate draining from said liver to be discharged through at least one outflow blood vessel different from said inflow blood vessel; and
d) an anastomosis step of anastomosing said plurality of conserved blood vessels to blood vessels of said living body while maintaining perfusion of said liver in said step c).
